# EUROPÄISCHE PATENTSCHRIFT

(11) **EP 1 926 943 B1**
(45) Veröffentlichungstag und Bekanntmachung des Hinweises auf die Patenterteilung: **30.03.2011**
(21) Anmeldenummer: 06761821.5
(22) Anmeldetag: 13.07.2006
(51) Int. Cl.: F24J 2/05

(54) **GLAS-METALL-VERBINDUNG INSBESONDERE FÜR EINEN VAKUUM-ROHR-SOLARKOLLEKTOR**
GLASS-METAL CONNECTION, IN PARTICULAR FOR A VACUUM-TUBE SOLAR COLLECTOR
JONCTION VERRE-METAL EN PARTICULIER POUR UN COLLECTEUR SOLAIRE TUBULAIRE SOUS VIDE

(30) Priorität: 20.09.2005 DE 202005014828 U; 20.09.2005 DE 202005014826 U; 20.09.2005 DE 202005014831 U
(43) Veröffentlichungstag der Anmeldung: 04.06.2008
(73) Patentinhaber: Narva Lichtquellen GmH + Co. KG, 09618 Brand-Erbisdorf (DE)
(72) Erfinder: MIENTKEWITZ, Gerhard, 09599 Freiberg (DE); SCHAFFRATH, Wilfried, 01738 Dorfhain (DE); KÖHLER, Tobias, 09618 Brand-Erbisdorf (DE)
(74) Vertreter: Neumann, Günter
(86) Internationale Anmeldenummer: PCT/DE2006/001244
(87) Internationale Veröffentlichungsnummer: WO 2007/033630

(56) Entgegenhaltungen:
- DE-A1- 4 422 755
- DE-C- 973 105
- GB-A- 222 510
- GB-A- 452 558
- JP-A- 59 180 237
- US-A- 4 231 353

## Beschreibung

Die Erfindung betrifft eine Glas-Metall-Verbindung mit einem Hüllrohr aus anorganischem Glas, die insbesondere für einen Vakuum-Rohr-Solarkollektor geeignet ist.

Bei derartigen Vakuum-Rohr-Solarkollektoren ist innerhalb des evakuierten Hüllrohres eine die solare Strahlung absorbierende Fläche angeordnet, die durch eine geeignete Fügetechnik thermisch mit dem Rohr beziehungsweise mehreren Rohren verbunden ist. Dieses Rohr beziehungsweise die Rohre dienen dem Transport der absorbierten solaren Wärme mittels fortführender Flüssigkeit als Wärmeträger. Beide Enden des Hüllrohres müssen vakuumdicht verschlossen sein.

Allgemein wird das eine Ende des Hüllrohres durch Verschmelzen von Glas vakuumdicht verschlossen.

Es ist bekannt, das andere Ende des Hüllrohres mit einer Glas-Metall-Verbindung vakuumdicht zu verschließen, wobei ein Wärmeausleitrohr oder mehrere Wärmeausleitrohre durch ein metallisches Verbindungsteil stoßen und mit diesem vakuumdicht durch Löt- oder Schweißverbindung verbunden sind. Der äußere Rand der Glas-Metall-Verbindung des Vakuum-Rohr-Solarkollektors bildet seinerseits mit dem gläsernen Hüllrohr eine vakuumdichte Verbindung. Das metallische Verbindungsteil und die vakuumdichte Verbindung am äußeren Rand des Verbindungsteiles bilden gemeinsam die Glas-Metall-Verbindung.

Das technische Problem einer vakuumdichten Verbindung zwischen einem Glas und einem Metall besteht darin, dass sich die Ausdehnungskoeffizienten von Gläsern und Metallen normalerweise erheblich unterscheiden und dass es deshalb bei Temperaturänderungen zu Spannungsrissen und damit zum Verlust des Vakuums kommt.

Zur Lösung des Problems gibt es eine Reihe von technischen Ausführungen.

Bekannt sind nach "Werkstoffkunde der Hochvakuumtechnik", Berlin, Verlag Julius Springer, 1936, Lösungen, bei denen Glas-Metall-Verbindungen für Gläser mit sehr geringem Ausdehnungskoeffizienten, wie Quarz- oder Borosilikatgläser, hergestellt werden, indem eine Folge von Zwischengläsern mit jeweils zunehmenden Ausdehnungskoeffizienten so aneinander geschmolzen werden, dass der Unterschied der Ausdehnungskoeffizienten zwischen den jeweils verschmolzenen Gläsern ein bestimmtes Maß nicht überschreitet. Ist der Ausdehnungsunterschied zum Metall klein genug, wird das Metall an das letzte Glasteil angeschmolzen.

Nachteilig bei dieser Lösung sind die Kompliziertheit und die sehr hohen Aufwendungen für das Anschmelzen des Zwischenglases bzw. der Zwischengläser (Schachtelhalm). Ein solches Verfahren ist praktisch nicht automatisierungsfähig.

Die US 2005/0181925A1 beschreibt eine technische Lösung, bei der das Ziel darin besteht, eine automatische Produktionstechnologie zu ermöglichen. Bei dieser Lösung wird für zwei verschiedene Borosilikatgläser eine im Ausdehnungskoeffizienten entsprechende Metalllegierung angegeben, die einen Ausdehnungskoeffizienten von 5 E-6 / K aufweist und mit der eine Rohranschmelzung möglich ist, wobei das Glasrohr mit einem Metallrohr vakuumdicht verschmolzen wird, indem das dünnwandige Metallrohr axial in den Rand des dickwandigen Glasrohres eintaucht.

Als Nachteil erweist sich, dass die vorgeschlagene Lösung nur für energetisch aufwändig und aus teuren Rohstoffen herzustellende Borosilikatgläser geeignet ist und dass die Herstellung der Glas-Metall-Verbindung ein mehrstufiger Prozess ist, da das Metallrohr seinerseits über ein Verbindungsstück mit dem Wärmeausleitrohr vakuumdicht verbunden werden muss.

Bekannt sind nach "Technologie der Glasverschmelzungen" Leipzig 1961, Akademische Verlagsgesellschaft Geest & Portig KG, sogenannte Rohranschmelzungen von Metallrohren an Glasrohren. Gemeinsam ist diesen Rohranschmelzungen, dass das Metallrohr in den erhitzten Glasrand axial eintaucht bzw. einseitig angeschmolzen wird. Besteht eine größere Differenz in den Ausdehnungskoeffizienten zwischen dem Metall und dem Glas ist das Metall schneidenförmig auszuformen. Die Dicke der Metallschneide, die Steigung der Schneide und die Breite der Anschmelzungen hängen vom Durchmesser des vakuumdicht anzuschmelzenden Metallrohrs ab und sind in der oben genannten Schrift für Kupferrohre nicht offenbart.

Aus GB 222 510 geht eine Glas-Metallverbindung mit einem Metallrohr hervor, dessen äußerer Randabschnitt eine Schneide aufweist, an der axial ein separates Glasteil angeschmolzen ist. Es handelt sich um eine typische Schneidenanglasung von Materialien.

Das GB 452 558 offenbart eine Technologie zur maschinellen Anglasung. Über den ebenfalls als Schneide ausgebildeten Randabschnitt eines Metallrohres wird von innen nach außen ein Glasteil geformt und mit dem Randabschnitt verschmolzen.

Mittels eines weiteren technologischen Schrittes wird sowohl bei der technischen Lösung gemäß GB 222 510 als auch gemäß GB 452 558 durch eine sogenannte "end to end"-Verbindung am geformten Glasteil axial ein Glasrohr angeschmolzen.

Das Patent, US 4,231,353, offenbart eine Lösung, bei der ein oder zwei das Hüllrohr umfassende rotationssymmetrische metallische Deckel so ausgeformt sind, dass das gläserne Hüllrohr aus Kalk-Natron-Glas eines Vakuum-Rohr-Solarkollektors in ringförmig eingeprägte Rinnen am äußern Rand der Deckel eingreift. Dabei taucht das Hüllrohr in ein anfänglich flüssiges Material, üblicherweise Bleiglaspulver, das in der Rinne zum Schmelzen gebracht wird, und dann dort erstarrt. Dadurch wird eine vakuumdichte Verbindung zwischen dem metallischen Deckel und dem Hüllrohr hergestellt. Die Deckel bestehen aus einer Ni-Cr-Fe-Legierung. Durch die Mitte der Deckel werden das oder die Wärmeausleitrohre zum Fortleiten der Wärme geführt. Die Wärmeausleitrohre sind mit den Deckeln vakuumdicht durch Löt- oder Schweißverbindung verbunden.

Nachteilig bei diesem Verfahren sind die erheblichen Prozesszeiten durch das erforderliche Einbringen und Aufschmelzen des Bleiglaspulvers und das komplizierte Handhaben von Deckel und Hüllrohr, so dass das vorgeschlagene Verfahren nur mit höchsten technischen Aufwendungen automatisierbar ist.

Bekannt sind des Weiteren auch Glas-Metall-Verbindungen nach "Werkstoffkunde der Hochvakuumtechnik", Berlin, Verlag Julius Springer, 1936. Auch hier sind die vakuumdicht anzuschmelzenden Rohre mit entsprechenden Schneiden ausgestattet, um unterschiedliche Dehnungen von Glas und Metall bei Temperaturveränderungen auszugleichen. Die Nachteile entsprechen den oben beschriebenen.

Aufgabe der Erfindung ist es daher, eine Glas-Metall-Verbindung insbesondere für einen Vakuum-Rohr-Solarkollektor, bereitzustellen, die über einen sehr langen Zeitraum vakuumdicht bleibt, die den mechanischen Belastungen durch thermische Dehnungen, Dampfschläge und Windlasten widersteht und die technologisch einfach, insbesondere automatisch, zu fertigen ist und geringere Materialaufwendungen erfordert.

Erfindungsgemäß wird die Aufgabe durch eine Glas-Metall-Verbindung mit den Merkmalen des Anspruchs 1 gelöst.

Mit der Erfindung verbindet sich der Vorzug, dass die Glas-Metall-Verbindung einfach maschinell herstellbar und damit leicht automatisierungsfähig und insofern auch Kosten sparend ist

Die spezielle Form der Glas-Bördelung und die Gestaltung des Verbindungsteiles weisen den besonderen Vorzug auf, dass sowohl Eigen- als auch Lastspannungen vom Glas aufgenommen werden können, was die Vakuumdichtheit der Verbindung auch bei erheblicher Krafteinwirkung, beispielsweise durch Dehnungs-, Wind- und Kavitationskräfte, über einen langen Zeitraum gewährleistet.

Eine besondere Ausführungsform der Erfindung sieht vor, dass das metallische Verbindungsteil mit einem Wärmeausleitrohr oder mehreren Wärmeausleitrohren vakuumdicht verbunden ist.

Nach einer weiteren Ausführungsform der Erfindung besitzen das metallische Verbindungsteil und das Glas des Hüllrohres einen annähernd gleich großen linearen Ausdehnungskoeffizienten.

Gemäß einer bevorzugten Ausführungsform der erfindungsgemäßen Lösung beträgt der lineare Ausdehnungskoeffizient α des Glases des Hüllrohres 9,5 x E -6 / K bis 10,1 x E -6 / K.

Eine weitere Ausführungsform der Erfindung sieht vor, dass das metallische Verbindungsteil aus einer Metalllegierung, enthaltend einen Nickelanteil ≥ 50%, einen Mangananteil ≤ 0,6%, einen Aluminiumanteil ≤ 0,1%, einen Chromanteil ≤ 0,25% und einen Siliziumanteil ≤ 0,3%, ergänzt jeweils durch einen Eisenanteil, besteht.

Gemäß einer vorteilhaften Ausgestaltung der Glas-Metall-Verbindung weist der äußere Randabschnitt des metallischen Verbindungsteiles eine Dicke von 0,1 mm bis 0,5 mm, vorzugsweise von 0,2 mm, auf und ist in einer Länge von 2 mm bis 8 mm, vorzugsweise von 4,2 mm, durch das Ende des Hüllrohres vakuumdicht umschlossen.

Nach einer besonders bevorzugten Ausführungsform der Erfindung ist auf dem umlaufenden Randabschnitt des metallischen Verbindungsteiles vor dem Anschmelzen eine durch eine thermische Behandlung oder mehrere thermische Behandlungen bei vorzugsweise 800°C ± 100°C, besonders bevorzugt bei 800°C ± 20°C, bewirkte Oxidschicht aufgebracht worden.

Im Folgenden soll die Erfindung an Hand einer Zeichnung näher erläutert werden. Es zeigt
- Fig.: 1 den Vakuum-Rohr-Solarkollektor mit erfindungsgemäßer Glas-Metallverbindung teil- weise im Schnitt.

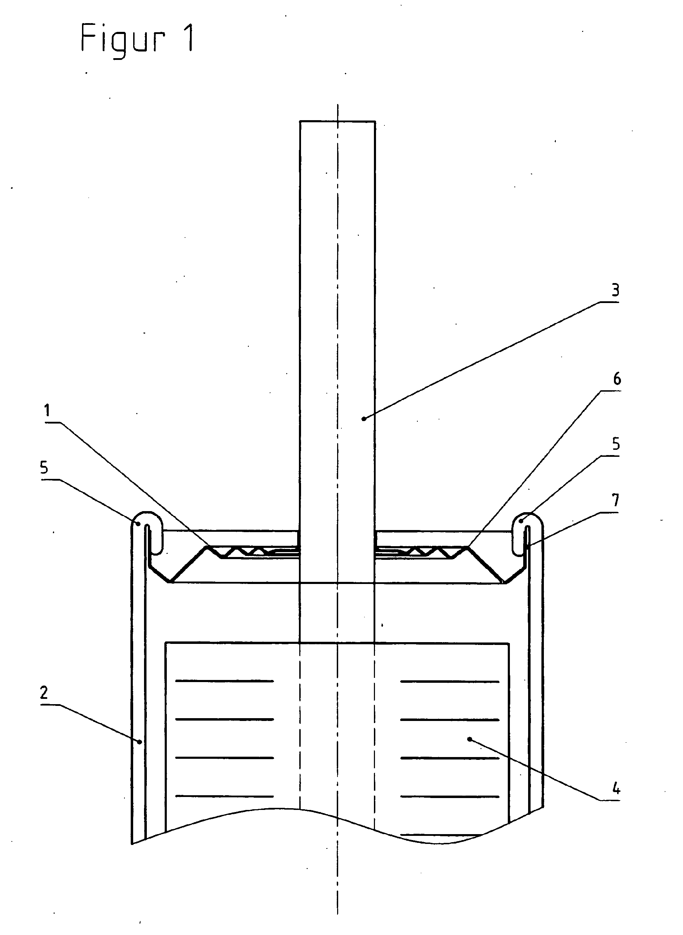

Wie aus Fig. 1 ersichtlich ist, weist der Kollektor das Hüllrohr 2 und das Wärmeausleitrohr 3 auf, das auch das Absorberblech 4 trägt.

Das metallische Verbindungsteil 1 ist vakuumdicht durch Schweißung oder Lötung mit dem Wärmeausleitrohr 3 verbunden. Sein äußerer Randabschnitt 7 ist mittels Bördel-Technik mit dem Ende 5 des Hüllrohres 2 so verbunden, dass das Ende 5 des Hüllrohres 2 von außen nach innen über den Randabschnitt 7 des Verbindungsteiles 1 geformt ist und diesen im verschmolzenen Zustand direkt beidseitig vakuumdicht umschließt.

Eine ringförmig, um das Wärmeausleitrohr 3 verlaufende Sicke 6 dient der Aussteifung des Verbindungsteiles 1. Die Sicke 6 steift das Verbindungselement 1 axial zur Rohrachse aus und dient gleichzeitig der Aufnahme von Kräften, die rechtwinklig zur Rohrachse auf das Wärmeausleitrohr 3 wirken. Eine solche Gestaltung setzt das Verbindungsteil 1 in die Lage, dem Luftdruck ohne wesentliche Verformungen zu widerstehen. Gleichzeitig trägt die Sicke 6 dazu bei, dass der Glas-Metall-Übergang mechanisch nur sehr gering belastet wird.

Das metallische Verbindungsteil 1 besitzt den gleichen oder annähernd gleichen Ausdehnungskoeffizienten wie das Glas des Hüllrohres 2 des Vakuum-Rohr-Solarkollektors.

Zur Herstellung der erfindungsgemäßen Glas-Metall-Verbindung wird das Wärmeausleitrohr 3, das das Absorberblech 4 trägt und an dessen einem Ende das Verbindungsteil 1 mit dem Wärmeausleitrohr 3 vakuumdicht verbunden ist, so in das Hüllrohr 2 eingeschoben, dass das Glas des Hüllrohres 2 einige Millimeter über den Rand des metallischen Verbindungsteiles 1 ragt. Nun wird das Glas des Hüllrohres 2 bis zur Erweichung erhitzt, so dass das Glas durch innere und äußere Formwerkzeuge so an die äußere und innere Oberfläche des Randabschnittes 7 des Verbindungsteiles 1 gedrückt werden kann, dass eine vakuumdichte und mechanisch stabile Verschmelzung in der Art einer Bördelung entsteht.

Für das Verbindungsteil 1 ist vorzugsweise ein Metall geringer Wärmeleitfähigkeit zu wählen, um die Verschmelzung des Verbindungsteiles 1 mit dem Hüllrohr 2 thermisch möglichst wenig zu stressen und um möglichst geringe Wärmeverluste zu bewirken.

Bei der Verwendung eines Materials für das Verbindungsteil 1, das weitgehend in seinem Ausdehnungskoeffizienten mit dem des Glases des Hüllrohres 2 übereinstimmt, soll der vom Glas umschlungene Randabschnitt 7 des Verbindungsteiles 1 einen Radius von 0,1 mm aufweisen.

Wählt man als Verbindungsteil 1 ein duktiles Material, wie z. B. Kupfer, sind die in der angegebenen Literatur vermerkten Schneiden hinsichtlich Stärke, Länge und Schneidenwinkel zu beachten.

Für den Vakuum-Rohr-Solarkollektor kann ein Hüllrohr 2, aus Kalk-Natron-Glas mit folgender chemischen Zusammensetzung eingesetzt werden (Angaben in Masse - %)

| | |
|---|---|
| SiO₂ | 71,41 % |
| Al₂O₃ | 2,20 % |
| Fe₂O₃ | 0,03 % |
| TiO₂ | 0,05 % |
| CaO | 4,90% |
| Mg0 | 3,40 % |
| BaO | 0.03% |
| Na₂O | 16,10 % |
| K₂O | 1,50 % |
| SO₃ | 0,30 % |

Es besitzt in dieser Zusammensetzung einen Ausdehnungskoeffizienten von (9.8 ± 0,2) E-6 /K).

Als Ausgangsmaterial für das Verbindungsteil 1 wird nachstehende Legierung gewählt:

| | |
|---|---|
| Ni = 50 % | Cr ≤ 25% |
| Si ≤ 0,3% | Al ≤ 0,1% |
| Mn ≤ 0,6 % | Fe = Differenz zu 100 % |

Der Ausdehnungskoeffizient des Verbindungsteils 1 liegt bei dieser Legierungszusammensetzung im Bereich des Ausdehnungskoeffizienten des Glases des Hüllrohres 2.

Darüber hinaus besitzt das Material des Verbindungsteiles 1 eine sehr niedrige Wärmeleitfähigkeit, so dass die thermischen Belastungen der Verschmelzstelle der erfindungsgemäßen Glas-Metall-Verbindung relativ niedrig sind, auch wenn die Stagnationstemperatur erreicht ist.

Das Verbindungsteil 1 wird aus Blech einer Stärke von ca. 0,2 mm tiefgezogen. Der später vom Ende 5 des Hüllrohres 2 umschlossene Randabschnitt 7 des Verbindungsteiles 1 wird, um Spannungen im Glas zu vermeiden, abgerundet. Der Radius dieser Abrundung liegt bei 0,1 mm. Abhängig von der Art des späteren Verschmelzprozesses mit dem Glas des Hüllrohres 2 kann das Verbindungsteil 1 voroxidiert werden. Nach diesen Vorbehandlungen wird das Verbindungsteil 1 mit dem das Absorberblech 4 tragenden Wärmeausleitrohr 3 vakuumdicht, vorzugsweise durch Lötung, verbunden.

Nach dem Einschieben des Wärmeausleitrohres 3, mit Absorberblech 4 und Verbindungsteil 1, in der Weise, dass das Hüllrohr 2, ca. 4 mm übersteht, erfolgt eine stufenweise oder stetige Erhitzung des Glases des Hüllrohres 2, bis seine Verformbarkeit erreicht ist. Auf mehreren Bearbeitungsstufen wird nun das Glas des Hüllrohres 2 mittels Werkzeugen so nach innen verformt, dass es mit dem umlaufenden Randabschnitt 7 des Verbindungsteiles 1 sowohl innen als auch außen eine innige Verbindung in der Art einer Bördelung eingeht. Abschließend erfolgt eine Temperung des Verbindungselementes 1, um die Spannungsfreiheit des Glases des Hüllrohres 2 zu sichern.

Zur Verbesserung seiner Antireflexionswirkung sowie seiner Korrosionseigenschaften und Schlagfestigkeit ist das Hüllrohr 2 auf seiner inneren und/oder äußeren Grenzfläche in einer Dicke von 40 nm bis 330 nm, vorzugsweise von 150 nm, mit einer Schicht oder mehreren Schichten Nanoteilchen, vorzugsweise aus Siliziumdioxid, versehen. Diese Nanoteilchen besitzen eine Komgröße von 5 nm bis 50 nm, vorzugsweise von 12 nm.

Die Beschichtung des Hüllrohres kann durch ein- oder mehrmaliges Tauchen und langsames Herausziehen des Rohres aus einer Suspension, enthaltend SiO₂, einen Binder, ein Netzmittel und ein Dispersionsmittel, wie deionisiertes Wasser, erfolgen. Nach dem Herausziehen werden die so auf der inneren und äußeren Oberfläche entstandenen Beschichtungen luftgetrocknet und anschließend bei einer Temperatur von ca. 450°C getempert.

Obwohl ein spezifisches Ausführungsbeispiel der Erfindung zur Erläuterung gezeigt und beschrieben wurde, ist die Erfindung nicht auf das dargestellte Ausführungsbeispiel beschränkt. Die Erfindung umfasst auch alle Ausführungen und Modifikationen der Anwendung von Glas-Metall-Verbindungen, insbesondere für vakuumdichte Behältnisse, die innerhalb des Schutzumfanges der Ansprüche liegen.

### BEZUGSZEICHENAUFSTELLUNG

- 1: Verbindungsteil
- 2: Hüllrohr
- 3: Wärmeausleitrohr
- 4: Absorberblech
- 5: bördelartig geformtes Ende
- 6: Sicke
- 7: Randabschnitt

## Patentansprüche

1. Glas-Metall-Verbindung, insbesondere für einen Vakuum-Rohr-Solarkollektor, mit einem metallischen Verbindungsteil (1), das ein Wärmeausleitrohr (3) und ein Hüllrohr (2) aus Glas vakuumdicht verbindet, wobei ein Ende (5) des Hüllrohres (2) nach innen bördelartig so verformt ist, dass es einen äußeren Randabschnitt (7) des metallischen Verbindungsteiles (1) beidseitig durch Verschmelzen vakuumdicht umschließt.

2. Glas-Metall-Verbindung nach Anspruch 1, **dadurch gekennzeichnet, dass** das Verbindungsteil (1) mit einem Wärmeausleitrohr (3) oder mehreren Wärmeausleitrohren (3) vakuumdicht verbunden ist.

3. Glas-Metall-Verbindung nach einem der Ansprüche 1 bis 2, **dadurch gekennzeichnet, dass** das Verbindungsteil (1) und das Glas des Hüllrohres (2) einen annähernd gleich großen linearen Ausdehnungskoeffizienten besitzen.

4. Glas-Metall-Verbindung nach Anspruch 3, **dadurch gekennzeichnet, dass** der lineare Ausdehnungskoeffizient a des Glases des Hüllrohres (2) 9,5 x E -6 / K bis 10,1 x E -6 / K beträgt.

5. Glas-Metall-Verbindung nach einem der Ansprüche 1 bis 4, **dadurch gekennzeichnet, dass** das Verbindungsteil (1) aus einer Metalllegierung, enthaltend einen Nickelanteil ≥ 50%, einen Mangananteil ≤ 0,6%, einen Aluminiumanteil ≤ 0,1%, einen Chromanteil ≤ 0,25% und einen Siliziumanteil ≤ 0,3%, ergänzt jeweils durch einen Eisenanteil, besteht.

6. Glas-Metall-Verbindung nach einem der Ansprüche 1 bis 5, **dadurch gekennzeichnet, dass** der äußere Randabschnitt (7) des Verbindungsteiles (1) eine Dicke von 0,1 mm bis 0,5 mm, vorzugsweise von 0,2 mm, aufweist und in einer Länge von 2 mm bis 8 mm, vorzugsweise von 4,2 mm, durch das Ende (5) des Hüllrohres (2) vakuumdicht umschlossen ist.

7. Glas-Metall-Verbindung nach einem der Ansprüche 1 bis 6, **dadurch gekennzeichnet, dass** auf dem umlaufenden Randabschnitt (7) des Verbindungsteiles (1) vor dem Anschmelzen des Hüllrohres (2) eine durch thermische Behandlung oder mehrere thermische Behandlungen bewirkte Oxidschicht aufgebracht ist.

## Claims

1. Glass-metal-bond, in particular for a vacuum-tube-solar-collector, with a metallic joint-element (1), which connects an outbound heat-transfer-tube (3) and a sheathing (2) made from glass, whereas an end (5) of the sheathing (2) is warped inwards in a flanged manner, so that it encloses an outer rim (7) of the metallic joint-element (1) on both sides vacuum-tight by edge-melting.

2. Glass-metal-bond according to claim 1, **characterized in that** the joint-element (1) is connected with an outbound heat-transfer-tube (3) or a plurality of outbound heat-transfer-tubes (3) in a vacuum-tight manner.

3. Glass-metal-bond according to any one of claims 1 to 2, **characterized in that** the joint-element (1) and the glass of the sheathing (3) comprise approximately the same linear coefficient of expansion.

4. Glass-metal-bond according to claim 3, **characterized in that** the linear coefficient of expansion α of the glass of the sheathing (2) amounts to 9.5 E-6/K to 10.1 E-6/K.

5. Glass-metal-bond according to any one of claims 1 to 4, **characterized in that** the joint-element (1) consists of a metal alloy, comprising a nickel-component ≥50%, a manganese-component ≤ 0.6%, an aluminum-component ≤ 0.1%, a chromium-component ≤ 0.25% and a silicon-component ≤ 0.3%, complemented by an iron-component.

6. Glass-metal-bond according to any one of claims 1 to 5, **characterized in that** the outer rim (7) of the joint-element (1) comprises a thickness of 0.1 mm to 0.5 mm, preferred of 0.2 mm, and is enclosed over a length of 2 mm to 8 mm, preferred of 4.2 mm by the end of the sheathing (2) in a vacuum-tight manner.

7. Glass-metal-bond according to any one of claims 1 to 6, **characterized in that** on the revolving rim (7) of the joint-element (1) an oxide-layer is deposited by thermal treatment or a plurality of thermal treatments before fusing the sheathing (2).

## Revendications

1. Composé verre/métal, notamment pour un capteur solaire tubulaire sous vide, muni d'un élément de connexion métallique (1) relisant, de manière étanche au vide, un tube d'évacuation de chaleur (3) et une gaine (2) de verre, une extrémité (5) de la gaine (2) présentant une forme de rebord replié vers l'intérieur de sorte à sceller par fusion des deux côtés une portion de rebord extérieure (7) de l'élément de connexion métallique (1).

2. Composé verre/métal selon la revendication 1, **caractérisé en ce que** l'élément de connexion (1) est relié de manière étanche au vide à un tube d'évacuation de chaleur (3) ou de plusieurs tubes d'évacuation de chaleur (3).

3. Composé verre/métal selon l'une des revendications 1 à 2, **caractérisé en ce que** l'élément de connexion (1) et le verre de la gaine (2) possèdent un coefficient de dilatation linéaire presque de même grondeur.

4. Composé verre/métal selon la revendication 3, **caractérisé en ce que** le coefficient de dilatation linéaire α du verre de la gaine (2) est compris entre 9,5 x E-6/K et 10,1 x E-6/K.

5. Composé verre/métal selon l'une quelconque des revendications 1 à 4, **caractérisé en ce que** l'élément de connexion (1) se compose d'un alliage de métal comprenant une part de nickel ≥ 50%, une part de manganèse ≤ 0,6%, une part d'aluminium ≤ 0,1%, une part de chrome ≤ 0,25% et une part de silicium ≤ 0,3%, avec à chaque fois un complément de fer.

6. Composé verre/métal selon l'une quelconque des revendications 1 à 5, **caractérisé en ce que** la portion de rebord extérieure (7) de l'élément de connexion (1) présente une épaisseur comprise entre 0,1 mm et 0,5 mm, de préférence 0,2 mm, et une longueur comprise entre 2 mm et 8 mm, de préférence 4,2 mm, et est scellée de manière étanche au vide par l'extrémité (5) de la gaine (2).

7. Composé verre/métal selon l'une quelconque des revendications 1 à 6, **caractérisé en ce qu'**une couche d'oxyde provoquée par un traitement thermique ou plusieurs traitements thermiques est appliquée sur la portion de rebord continue (7) de l'élément de connexion (1) avant la fusion avec la gaine (2).
